(19) Europäisches Patentamt
European Patent Office
Office européen des brevets

(11) **EP 1 228 605 B1**

(12) **EUROPEAN PATENT SPECIFICATION**

(45) Date of publication and mention
of the grant of the patent:
**02.06.2010 Bulletin 2010/22**

(51) Int Cl.:
***H04L 12/56*** (2006.01)   ***H04L 12/24*** (2006.01)

(21) Application number: **00973083.9**

(22) Date of filing: **07.11.2000**

(86) International application number:
**PCT/GB2000/004272**

(87) International publication number:
**WO 2001/035584 (17.05.2001 Gazette 2001/20)**

(54) **COMMUNICATIONS NETWORK**

KOMMUNIKATIONSNETZ

RESEAU DE COMMUNICATIONS

(84) Designated Contracting States:
**DE FR GB**

(30) Priority: **08.11.1999 EP 99308876**

(43) Date of publication of application:
**07.08.2002 Bulletin 2002/32**

(73) Proprietor: **BRITISH TELECOMMUNICATIONS
public limited company
London
EC1A 7AJ (GB)**

(72) Inventors:
• **DAVISON, Robert George
Ipswich,
Suffolk IP4 2RE (GB)**
• **MALENCHINO, Valerio
Ipswich,
Suffolk IP4 4AG (GB)**
• **DOMINGOS, José Pedro Correia Da Silva
Ipswich,
Suffolk IP4 5PP (GB)**
• **HUBBARD, Christopher John
Ipswich,
Suffolk IP4 4AA (GB)**

(74) Representative: **Nash, Roger William
BT Group Legal
Intellectual Property Department
PP C5A, BT Centre
81 Newgate Street
London
EC1A 7AJ (GB)**

(56) References cited:
**WO-A-99/11003     GB-A- 2 322 037**

• **O'NEILL A ET AL: "AN OVERVIEW OF INTERNET
PROTOCOLS" BT TECHNOLOGY JOURNAL, GB,
BT LABORATORIES, vol. 16, no. 1, 1 January 1998
(1998-01-01), pages 126-139, XP000736934 ISSN:
1358-3948**
• **NANDY B ET AL: "A connectionless approach to
providing QoS in IP networks" HIGH
PERFORMANCE NETWORKING. IFIP TC-6
EIGHTH INTERNATIONAL CONFERENCE ON
HIGH PERFORMANCE NETWORKING (HPN'98),
PROCEEDINGS OF EIGHTH INTERNATIONAL
CONFERENCE ON HIGH PERFORMANCE
NETWORKING, VIENNA, AUSTRIA, 21-25 SEPT.
1998, pages 363-379, XP002137755 1998, Norwell,
MA, USA, Kluwer Academic Publishers, USA
ISBN: 0-412-84660-8**

**Description**

The present invention relates to a communications network, and in particular to a packet network supporting different classes of service.

Conventionally, communications networks have used connection-oriented architectures in which a user is allocated a circuit, which may be established on a per-call basis. The circuit has a known bandwidth and so the quality of service (QoS) offered to the user can be guaranteed.

Increasingly, packet networks, and in particular datagram networks employing the Internet Protocol suite, are being used in place of conventional connection-oriented networks. Packet networks offer the advantages of more efficient use of available network resources, particularly for bursty traffic such as computer data. Datagram networks (a species of packet networks) additionally offer reduced management overheads and improved scalability. Conventionally, datagram networks have offered only "best-effort" service. As a result, during periods of congestion, packet delay and packet loss may reach high levels, with a corresponding fall in the quality of service offered to a user. While for some applications, such as email, such variations in quality of service may be tolerated, for other applications, such as telephony, there is a need to ensure that a minimum quality of service is maintained at all times. This may be achieved by over-dimensioning the network, but this then reduces or eliminates the advantages in efficiency of use of network resources. An alternative approach that has been proposed is to augment the packet transport protocols to provide for different classes of service, and then to accord individual packets, or packet flows, different priorities depending on their assigned quality of service. In schemes proposed by the IETF (Internet Engineering Task Force), packet headers include a differential service byte (DS byte) that is used to flag the quality of service for a particular packet.

The present applicant's co-pending International patent application WO99/13624 (BT case A25452) describes and claims an approach to implementing a differential service scheme in which packets are directed to different queues within a router depending on the value of the DS byte, and in which the different queues are allocated different predetermined portions of the output bandwidth available to the router. This is just one example of a number of different approaches that may be adopted to assign different levels of resources to packets depending upon their associated quality of service level.

Another example is seen in International Patent Application WO 99/11003 in which a policy is distributed to the packet forwarding nodes in a network. The policy may identify traffic groups, and the packet forwarding nodes then schedule the transmission of packets in dependence upon the traffic group to which the packets belong.

An example of a network node that offers different qualities of service to different traffic flows is seen in International Patent Application No. WO99/11003.

According to a first aspect of the present invention, there is provided a method of operating a node in a packet network carrying traffic assigned to different classes of service, the method including:

    (a) obtaining local performance measures in each of a plurality of different service classes for traffic output from the node onto a link, said method being characterised by:
    (b) automatically partitioning said node's resources for said link between said service classes taking into account the values of said performance measures for different service classes in order to maintain a target relationship between performance measures for the different service classes.

The present invention provides a method of managing differential service classes to maintain a configurable target relationship between QoS parameters for the different classes. The proposed system is distributed and locally autonomous. As a result, the management method can be implemented in a datagram network without detracting from the robustness and scalability of the network (a datagram network is a type of packet network in which the packets are datagrams - i.e. packets which have a destination address included within their header) These advantages are achieved by basing control of the allocation of resources upon local measurements of the performance measures of traffic in one class of service relative to those of traffic in another class of service. For example, gold, silver and bronze levels of service might be defined, together with a target relationship between the different levels of service. This target relationship specifies that the gold service should be twice as good (where "good" could take into account, for example, loss probability or latency) as the silver service and the silver service should be twice as good as the bronze service. One or more of a number of different performance parameters may be used to measure the quality of service. In one of the examples discussed below, the parameter is the number of bytes in each service class output onto the link in a given time period divided by the amount of bandwidth reserved for the class (we call this parameter load or utilisation). Use of this parameter provides the advantage that a noticeable difference between the different classes of service can be maintained even when the the link as a whole is lightly loaded.

A performance measure is found for each of the classes of service and the relationship between the performance measures for different classes is compared with a target relationship. If there is a significant departure from the target relationship, then the node may be managed to change the allocation of resources. For example, if the performance of the gold service class is less than twice as good as the performance of the silver service class, then bandwidth in the node allocated to the gold service class may be increased at the expense of the bandwidth allocated to the silver and/or bronze service classes.

Other performance parameters that may be measured include packet loss, packet delay, buffer overflow rates and average queue length. These are listed by way of example only and alternative parameters may be used where appropriate.

Preferably the method includes calculating a polling time between a first set of local measurements and a subsequent set of local measurements. The polling time between data collection operations may be constant, but preferably is determined by an algorithm in response to the traffic conditions so as to ensure that the system is adequately responsive to changes in the performance of the traffic, while minimising the amount of polling. For example, when changes in the measured performance parameters are found to be low over several successive measurements, then the polling interval may be increased. Conversely, when the performance parameters are found to change greatly between one measurement and the following measurement, then the polling interval may be decreased.

Systems embodying the present invention will now be described in further detail, by way of example only, with reference to the accompanying drawings in which:

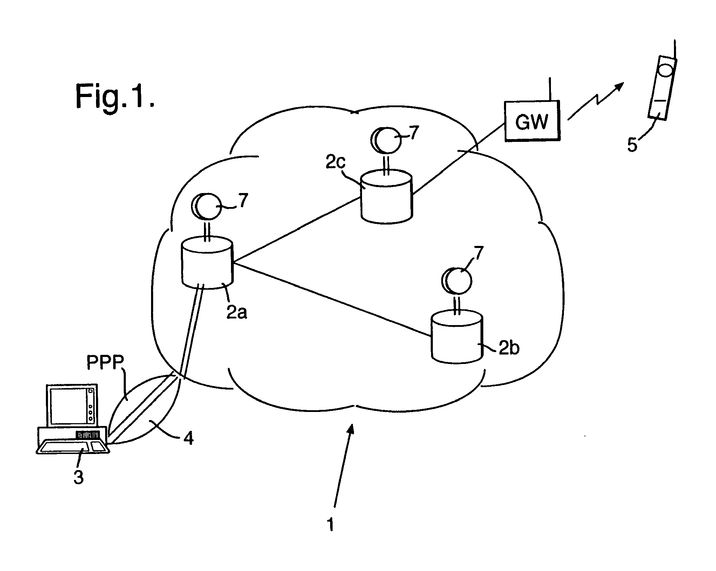

Figure 1 is a schematic of a network embodying the invention;
Figure 2 is a flow diagram for one of the control agents of Figure 1;
Figure 3 shows a management agent in further detail;
Figure 4 is a class diagram; and
Figure 5 is a message flow diagram.

A communications system includes a connectionless packet network 1. The network 1 includes a number of routers 2a, 2b, 2c. A customer terminal 3 is connected to the network 1 via an access network 4. In this example, the customer terminal 3 is communicating data to another customer terminal 5 connected to the network 1. The customer terminal shown in this example is an IP-enabled mobile phone connected via a GPRS gateway (GW). In this example, the network 1 is an Internet Protocol (IP) network and the data is communicated between the customer terminals 3, 5 via the network 1 as IP packets. Each of the IP packets includes a differential service (DS) byte as defined in IETF RFC 2474. A router such as that referenced 2a includes a separate buffer for each of three different classes. The router reads the DS byte of incoming packets and places a packet in the output buffer corresponding to the class of service indicated by the DS byte. Each buffer is allocated a different proportion of the output bandwidth of the router onto the respective link of the connectionless packet network 1.

Each of the routers 2a-2c has associated with it one or more service management agents 7. As is further described below, each of the service management agents polls the corresponding router and receives back from the router performance parameters for each of the service classes on a respective link. A separate service management agent is provided for each link on a router. The service management agent compares the performance of the different service classes. If the performance of one class relative to another differs from a target performance, then the service management agent causes the allocation of resources to the different service classes on the node to be changed. The present example uses load as the quality parameter (load is defined here as the ratio between octets received and bandwidth allocated per each class). A lightly loaded class offers a better service than a more heavily loaded one.

In the present embodiment, each of the service management agents is implemented as an instance of a software object forming part of a network management application running on a network management platform remote from the routers. The network management platform may be, for example a UNIX workstation, and the router may be a commercially available IP router such as a CISCO 7000 series router. An SNMP (Simple Network Management Protocol) interface is used between the management platform and the routers and the SNMP messages are carried between the management platform and the routers as IP packets. The invention is however by no means limited to implementations in which the service management agents are physically remote from the routers, or the interaction protocol is SNMP. Because each control agent uses only data from a single router, the control agent may alternatively run on a control processor provided at the router. The signalling interface between the control agent and the router functions in this case may again use SNMP or alternatively different protocols may be used.

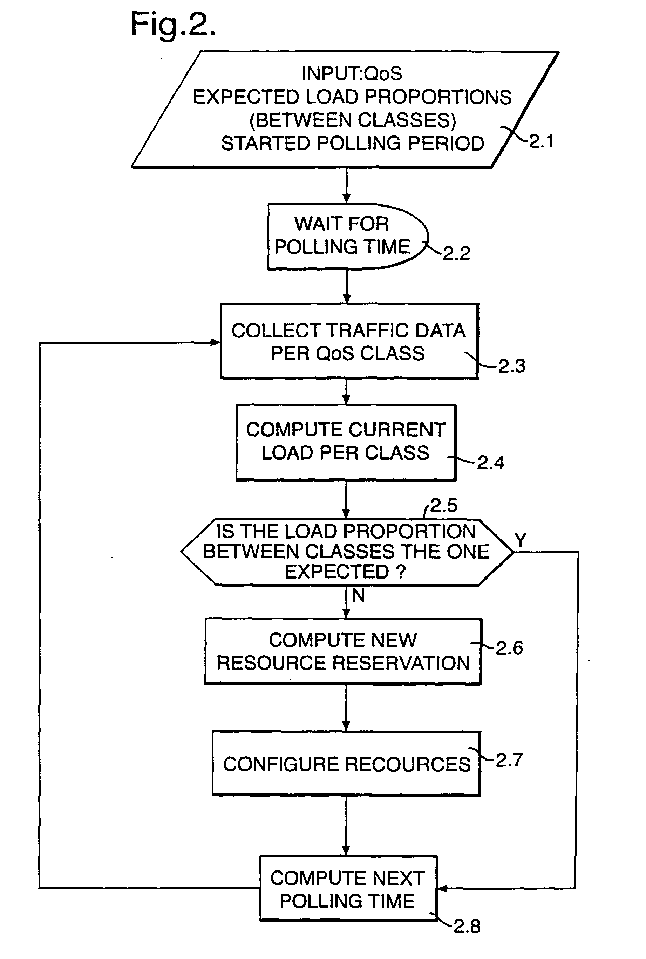

Figure 2 is a flow diagram illustrating the main control loop of one of the service management agents. In step 2.1, the agent is initialised with details of the QoS classes, the expected load proportions between the classes, and the value of the initial polling period. In step 2.2 the agent waits for the initial polling time. In step 2.3, the agent collects traffic data for each QoS class. In the present example, an SNMP GET message is sent from the service management agent to the router. The router returns the Out Octets and Drop Octets fields from the port associated with the DiffServ (Differential Services) MIB (Management Information Base). Using the returned data, the agent computes, in step 2.4, the current load for each class. In the present example, the node resource being controlled is the output bandwidth allocated to the different services and there are three proportional QoS classes. Accordingly, the load for each class is calculated as follows:

Load_class_1 = amount_of_traffic_class_1/bandwidth_allocated_to_class_1
Load_class_2 = amount_of_traffic_class_2/bandwidth_allocated_to_class_2
Load_class_3 = amount_of_traffic_class_3/bandwidth_allocated_to_class_3

In step 2.5, the control agent tests to determine whether the loading of the different classes corresponds to the target proportions. In this example, the target requires that the load of class 1 should be half the load of class 2 and the load of class 2 should in turn be half of the load of class 3. In this case, the test applied is:

((load_class_1_)< = (2*load_class_2)) AND ((load_class_2)< = (2*load_class_3))

If the test indicates that the measured loads differ from the target proportions then in step 2.6 the control agent calculates a new allocation of resources to the different classes on the router. The algorithm used to calculate the appropriate resource allocation may use predictive techniques to take account of statistical trends in the traffic levels, as well as reflecting the current measured traffic levels.

In step 2.7 the control agent sends an SNMP control message to the node to change the allocation of resources on the node. For example, the message may change the amount of bandwidth allocated to the different classes. In this example, class-based queuing, (CBQ), is used as the underlying scheduling mechanism on the router.

Subsequently, in step 2.8 the agent calculates the next polling interval.

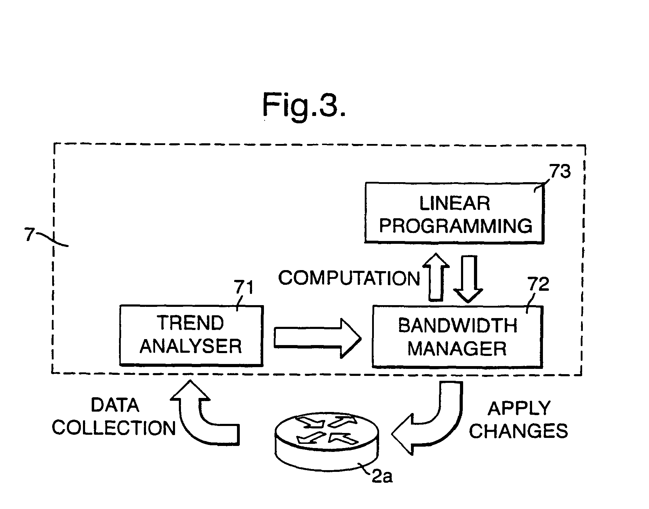

Figure 3 shows in further detail the structure of the service management agent 7. The agent comprises a trend analyser 71, a bandwidth manager 72 and a linear programming module 73.

The trend analyser 71 collects information from the router. Specifically, the trend analyser collects data indicating the number of octets sent towards the router output port per QoS class. As previously described, the interface used to interact with the router is the SNMP protocol. The trend analyser uses information on past traffic to infer the expected traffic per QoS class. Different methods may be used for this purpose. The present implementation calculates a weighted average of the past traffic over a measurement window of five polling periods. This implementation uses a fixed polling time period, but alternatively, the polling period may be varied depending on the statistics of the measured traffic. For each QoS class (3 in the example), this implementation samples the router for the number of input octets to the port (the port the specific instance of the trend analyser is in charge of). A variable specifying the number of measurements required to take a decision is set to 5 in this case. The measurements are used to compute the load (number of octets divided by amount of allocated bandwidth per class). The five loads are stored into a table. The analyser averages the five measurements taking weights into account. The weights are stored in a vector.

In the present implementation, the formula used to calculate the average traffic is:

$$L = 0.4*L5 + 0.25*L4 + 0.2*L3 + 0.1*L2 + 0.05*L1$$

where the constants are the weights we are using, L1, ..., L5 are the last 5 collected loads, L5 being the most recent and L1 the oldest. In this implementation, recent measurements are considered "more important" than less recent ones and so are give a bigger weight.

The weighted average past load is used as an estimation of the future load.

The bandwidth manager 72 receives forecast loads from the trend analyser 71 as input, and based on this information plus the current bandwidth allocation and the required proportion between classes calculates the new bandwidth allocation and (if required) applies changes to the router configuration using the SNMP protocol. The new resource allocation is computed using the linear programming module 73. The linear programming module computes a solution as follows: taking 3 classes of service, say gold, silver and bronze, with a given proportional relationship between them, a linear programming optimisation problem is defined as shown below -

$$\text{Let}\begin{cases} D_i = \text{Drop Octets} \quad \wedge \quad D_i \geq 0 \\ O_i = \text{Out Octets} \quad \wedge \quad O_i \geq 0 \\ R_i = \text{Class Ratio} \quad \wedge \quad R_i > 0 \quad \forall_i = 1(gold), 2(silver), 3(bronze) \\ x_i = \text{Class Bw} \quad \wedge \quad x_i \geq 0 \\ I_i = D_i + O_i \end{cases}$$

The Linear Programming inequalities are:

$$(1) \qquad \frac{I_1}{x_1} R_1 \leq \frac{I_2}{x_2} R_2 \quad \Leftrightarrow \quad -I_2 x_1 + \frac{R_1}{R_2} I_1 x_2 \leq 0$$

$$(2) \qquad \frac{I_2}{x_2} R_2 \leq \frac{I_3}{x_3} R_3 \quad \Leftrightarrow \quad -I_3 x_2 + \frac{R_2}{R_3} I_2 x_3 \leq 0$$

$$(3) \qquad x_1 + x_2 + x_3 \leq BW_{max}$$

and the cost function to maximise is the Bandwidth of the Bronze Class

$$(4) \qquad P = x_3$$

*Results*

By way of example, we now describe what will happen on a specific output port of a core router, in a system with three proportional classes where Bronze is supposed to have twice the load of Gold and Silver is supposed to have 1.5 the load of Gold.

The InputRateMonitor retrieves the utilised bandwidth on each of the classes.
This operation is performed by collecting data from the router through SNMP GET messages. ,
A proprietary SNMP MIB has been implemented to allow communication between SNMP Manager and Agent.
In the example, for the Gold class the OIDs (Object ID) of the retrieved counter objects are:

- ■ cbqStatsEntry.cbqStatsOutOctets.1.172.25.28.138
- ■ cbqStatsEntry.cbqStatsDropOctets.1.172.25.28.138

For Silver:

- ■ cbqStatsEntry.cbqStatsOutOctets.2.172.25.28.138
- ■ cbqStatsEntry.cbqStatsDropOctets.2.172.25.28.138

For Bronze:

- ■ cbqStatsEntry.cbqStatsOutOctets.3.172.25.28.138
- ■ cbqStatsEntry.cbqStatsDropOctets.3.172.25.28.138

The two collected objects are added, to obtain the number of octets that the port had to handle during the period between two consecutive polls. The rate is computed by taking the previous reading from current reading, divided by the polling period (rate is in Octets/sec). In the example, those values are:

- ■ Gold: 1 Mbit/s
- ■ Silver 2Mbit/s
- ■ Bronze: 3Mbit/s

This data is passed to the TrendAnalyser, which computes the weighted load average of the current and past 4 readings according to the algorithm described in the document describinf the Trend Analiser. Using 5 consecutive measurements the TrendAnalyser computes the average traffic rates for each class. Supposing (for the example) that the traffic is constant, the average is:

- ■ Gold: 1 Mbit/s
- ■ Silver 2Mbit/s
- ■ Bronze: 3Mbit/s

The weighted traffic averages for the 3 classes are passed to the BW Manager which then computes the allocated bandwidths according to the Linear Program. The values computed in our example are:

- ■ Reserved Gold Capacity:2.61 Mbit/s
- ■ Reserved Silver Capacity: 3.48 Mbit/s
- ■ Reserved Bronze Capacity: 3.91 Mbit/s

The new computed allocated bandwidths are set on the device through the proprietary CBQ MIB via SNMP Set commands. In the example, the OIDs (Object ID) to be set in the router are:

- ■ For the Gold class: cbqConfEntry.cbqConfBandwidth.1.172.25.28.138
- ■ For the Silver class: cbqConfEntry.cbqConfBandwidth.2.172.25.28.138
- ■ For the Bronze class: cbqConfEntry.cbqConfBandwidth.3.172.25.28.138

The above bandwidths give the following expected class loads:

- ■ Gold Expected Load: 0.383
- ■ Silver Expected Load: 0.575
- ■ Bronze Expected Load: 0.767
  and, the ratio between loads will give:
- ■ Bronze Expected Load/Gold Expected Load = 2.0
- ■ Silver Expected Load/Gold Expected Load = 1.5

That is the specified load ratio.

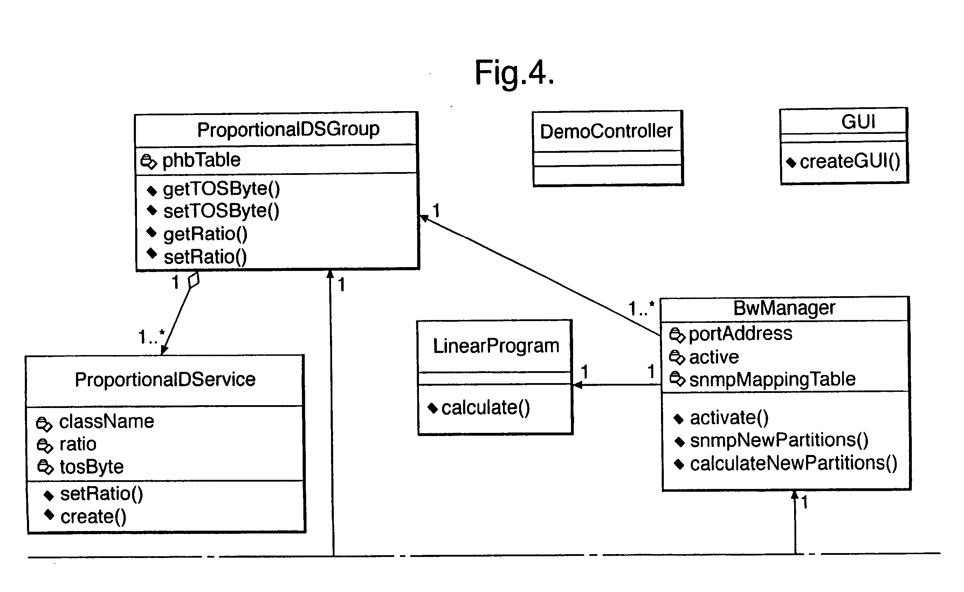

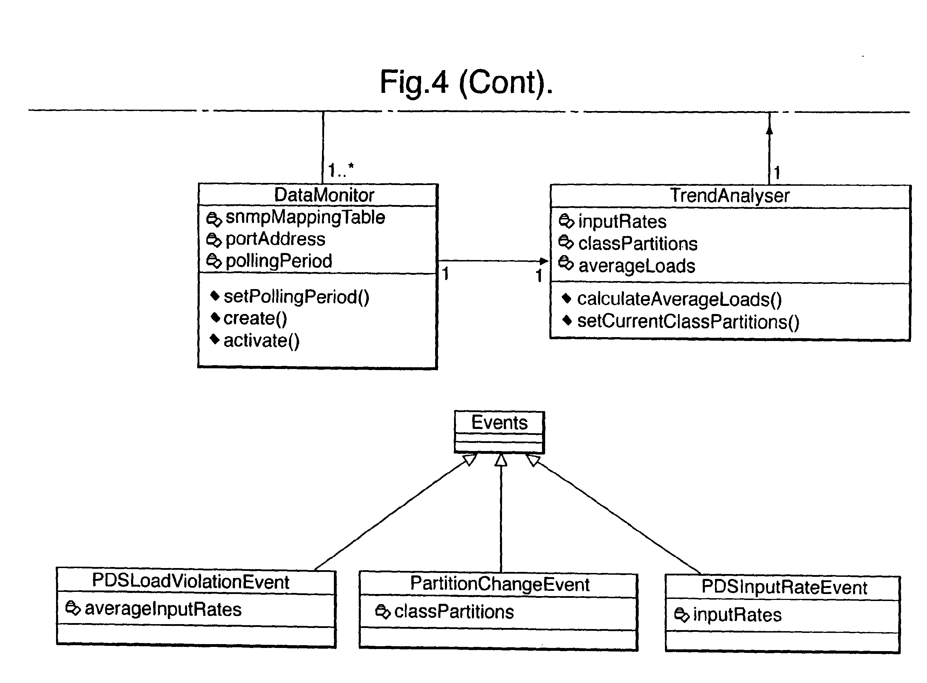

The present implementation is realised in Java. Figure 4 shows a high-level class diagram of the implementation. The main classes are:

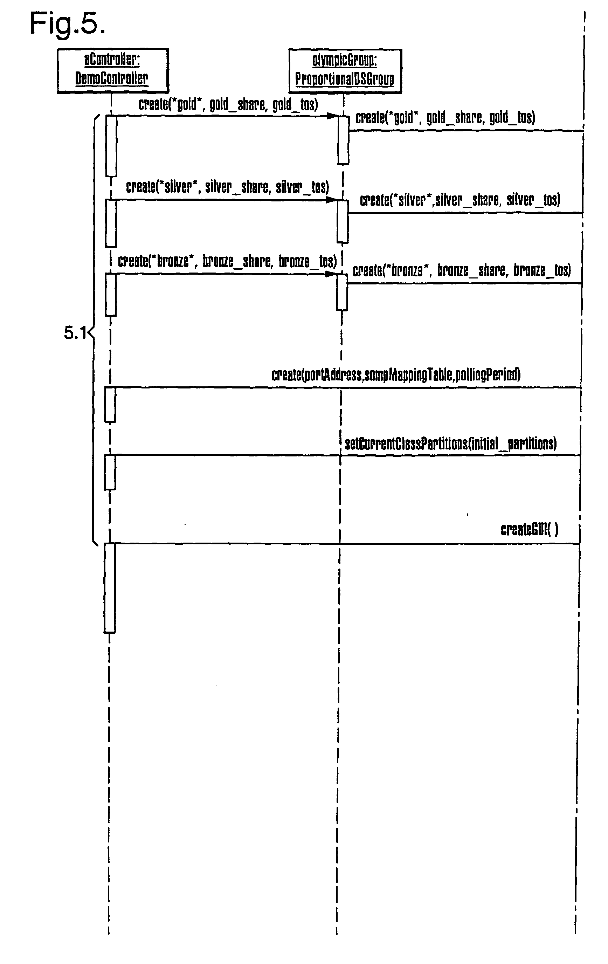

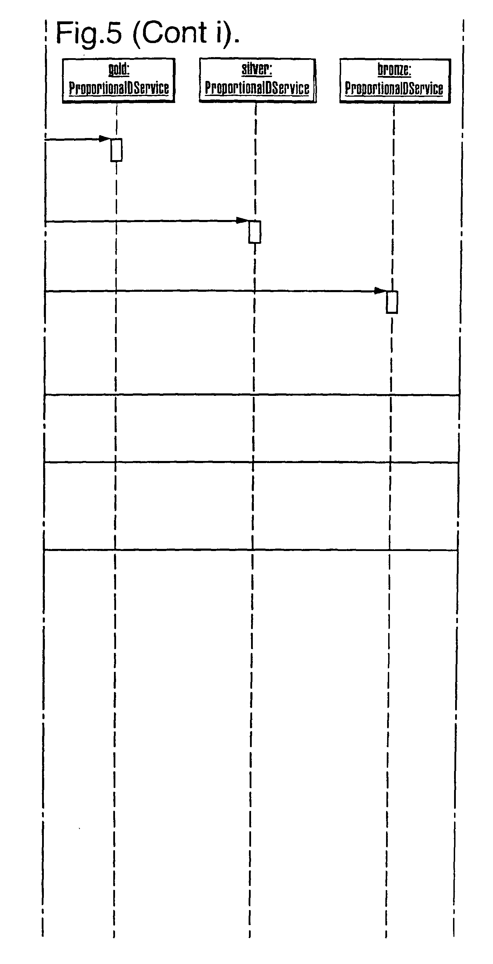

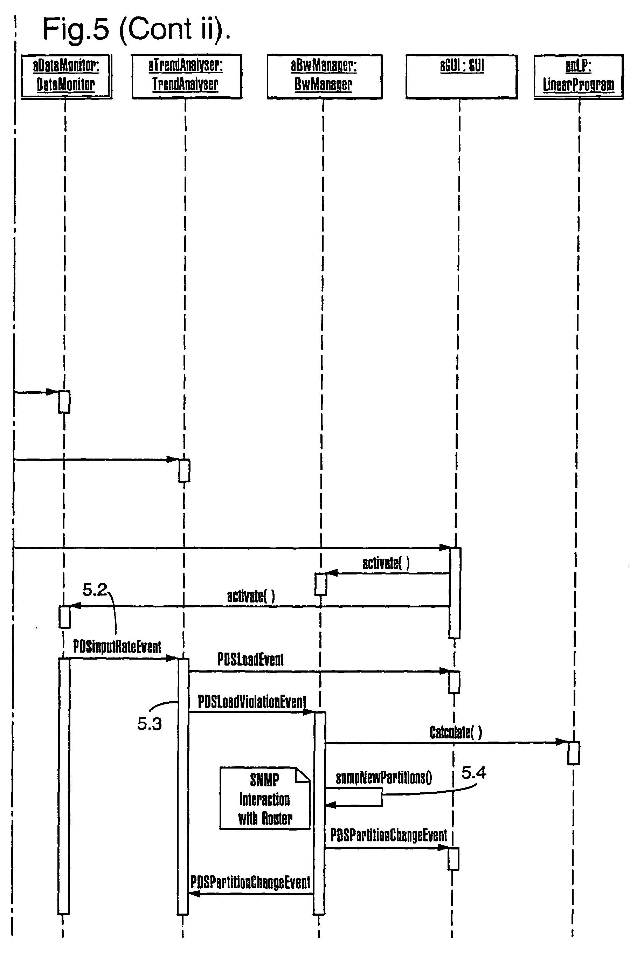

ProportionalDSGroup class: represents the set of QoS classes on which a proportional relationship is established. In the dynamic scenario example presented in Figure 5, the group is composed by the QoS services, Gold, Silver and Bronze.

ProportionalDService class: represents one of the QoS classes which compose a Group (e.g. Gold)

DataMonitor class: a monitoring class. It knows the polling frequency and the address of the routing port it is in charge of. Using a table (snmpMappingTable) that maps the information that has to be retrieved from the router to its SNMP name (Object ID), an instance of this class is able to get the required information at the required time.

TrendAnalyser class: this object calculates traffic trends useful to reallocate resources between different classes in case the required load proportion is no more valid. There are different algorithms that can be used for this purpose, the simplest ones being some sort of past traffic average. It receives the data on the past traffic from the DataMonitor.

BwManager class: the BwManager gets the trends information from the TrendAnalyzer and using a Linear Program object that takes the proportional constraints into account and generates the new required resource allocation. If required, it sets the new resource allocations on the router's port by use of the SNMP protocol.

Some communications between objects are asynchronous. These are realised by means of the Java event service. The class diagram of Figure 4 presents some of most important event objects (the information sent through events) of the system.

Figure 5 shows an example of message flows in this implementation. In a first phase (5.1) the system is initialised. The system includes a GUI (graphics user interface) to provide feedback to the system operator. Subsequently (5.2) data is passed from the router to the trend analyser in a "PDSInputRateEvent". In the illustrated system, this measurement indicates a departure from the intended load proportions for the different classes (5.3) and this triggers an SNMP interaction (5.4) with the router that changes the partitioning between the classes of the output bandwidth of router.

**Claims**

1. A method of operating a node (2a, 2b, 2c) in a packet network (1) carrying traffic assigned to different classes of service, the method including:

    (a) obtaining (2.3) local performance measures in each of a plurality of different service classes for traffic output from the node (2a, 2b, 2c) onto a link, said method being **characterised by**:
    (b) automatically partitioning (2.7) said node's resources for said link between said service classes taking into account the values of said performance measures for different service classes in order to maintain a target relationship between performance measures for the different service classes.

2. A method according to claim 1, wherein said performance measure obtaining step (2.3) comprises repeatedly obtaining a performance parameter, and determining a trend in said performance parameters.

3. A method according to claim 2, wherein said performance measure obtaining step (2.3) includes calculating from a time-sequence of performance parameters one or more predicted values for the or each performance parameter and using said predicted value as said performance measure.

4. A method according to any one the preceding claims, in which steps of (a) obtaining (2.3) and (b) automatically partitioning (2.7) are carried out autonomously for each of a plurality of links connected to the node.

5. A method according to any one of the preceding claims, in which the performance measure obtained in step (a) represents utilization by traffic belonging to each service class of the bandwidth reserved for that service class.

6. A method according to any one of the claims 1 to 4, in which the performance parameters determined in obtaining step (a) include one or more of: number of packets output; packet loss; packet delay; node buffer overflow rates; and average node output queue length.

7. A method according to any one of the preceding claims, including reading at the node (2a, 2b, 2c) a field carried with a packet and indicating a class of service allocated to the packet.

8. A method of operating a packet network (1) carrying traffic assigned to different classes of service, the network (1) comprising a plurality of nodes (2a,2b,2c) and links interconnecting the nodes, the method including:

    (a) at each node (2a,2b,2c), obtaining local performance measures in each of a plurality of different service classes for traffic output from the node (2a,2b,2c) onto a link; said method being **characterised by**:
    (b) automatically partitioning said node's resources for said link between said service classes taking into account the values of said performance measures for different service classes in order to maintain a target relationship between performance measures for different service classes;

    wherein steps (a) and (b) are carried out autonomously for each of the plurality of nodes (2a,2b,2c) and for each output link connected to a node (2a,2b,2c).

9. A management system for controlling a node (2a, 2b, 2c) in a packet network (1) carrying traffic assigned to different classes of service, comprising:

    (a) means (71) for reading local values of one or more performance measures in each of a plurality of different service classes for traffic output from the node (2a, 2b, 2c) onto a link;
    said management system being **characterised by**:
    (b) a control agent (72) responsive to the said means (71) for reading and arranged to partition said node's resources for said link automatically, taking into account the values of said performance measures in order to maintain a target relationship between performance measures for different service classes.

**Patentansprüche**

1.  Verfahren zum Betreiben eines Knotens (2a, 2b, 2c) in einem Paketnetz (1), das Verkehr befördert, der verschiedenen Dienstklassen zugewiesen ist, mit:

    (a) Ermitteln (2, 3) lokaler Leistungskennzahlen in jeder von mehreren unterschiedlichen Dienstklassen für Verkehr, der von dem Knoten (2a, 2b, 2c) in eine Verbindung ausgegeben wurde, wobei das Verfahren **gekennzeichnet ist durch**:
    (b) automatisches Abtrennen (2, 7) der Ressourcen des Knotens für die Verbindung zwischen den Dienstklassen unter Berücksichtigung der Werte der Leistungskennzahlen für unterschiedliche Dienstklassen, um eine Sollbeziehung zwischen Leistungskennzahlen für die unterschiedlichen Dienstklassen aufrechtzuerhalten.

2.  Verfahren nach Anspruch 1, wobei der Leistungskennzahlen-Ermittlungsschritt (2, 3) das wiederholte Ermitteln eines Leistungsparameters und Bestimmen eines Trends in den Leistungsparametern umfasst.

3.  Verfahren nach Anspruch 2, wobei der Leistungskennzahlen-Ermittlungsschritt (2, 3) das Berechnen eines oder mehrerer vorhergesagter Werte für den oder jeden Leistungsparameter aus einem zeitlichen Ablauf von Leistungsparametern und das Verwenden des vorhergesagten Werts als Leistungskennzahl beinhaltet.

4.  Verfahren nach irgendeinem der vorhergehenden Ansprüche, bei dem Schritte des (a) Ermittelns (2, 3) und (b) automatischen Abtrennens (2, 7) für jede von mehreren mit dem Knoten verbundenen Verbindungen eigenständig ausgeführt werden.

5.  Verfahren nach irgendeinem der vorhergehenden Ansprüche, bei dem die in Schritt (a) ermittelte Leistungskennzahl die Verwendung durch Verkehr darstellt, der zu jeder Dienstklasse der Bandbreite gehört, die für jene Dienstklasse reserviert ist.

6.  Verfahren nach irgendeinem der Ansprüche 1 bis 4, bei dem die im Ermittlungsschritt (a) festgelegten Leistungsparameter von: einer Anzahl ausgegebener Pakete; Paketverlust; Paketverzögerung; Knotenpufferüberlaufraten und durchschnittliche Länge einer Knotenausgabeschlange eine(n) oder mehrere einschließen.

7.  Verfahren nach irgendeinem der vorhergehenden Ansprüche, das das Lesen eines Felds, das in einem Paket befördert wird, an dem Knoten (2a, 2b, 2c) und das Angeben einer dem Paket zugeteilten Dienstklasse einschließt.

8.  Verfahren zum Betreiben eines Paketnetzes (1), das Verkehr befördert, der verschiedenen Dienstklassen zugeordnet ist, wobei das Netz (1) mehrere Knoten (2a, 2b, 2c) und Verbindungen, die die Knoten miteinander verbinden, umfasst und das Verfahren Folgendes einschließt:

    (a) Ermitteln lokaler Leistungskennzahlen an jedem Knoten (2a, 2b, 2c) in jeder der mehreren unterschiedlichen Dienstklassen für Verkehr, der von dem Knoten (2a, 2b, 2c) in eine Verbindung ausgegeben wurde; wobei das Verfahren **gekennzeichnet ist durch**:
    (b) automatisches Abtrennen der Ressourcen des Knotens für die Verbindung zwischen den Dienstklassen unter Berücksichtigung der Werte der Leistungskennzahlen für unterschiedliche Dienstklassen, um eine Sollbeziehung zwischen Leistungskennzahlen für unterschiedliche Dienstklassen aufrechtzuerhalten;

    wobei die Schritte (a) und (b) für jeden der mehreren Knoten (2a, 2b, 2c) und für jede mit einem Knoten (2a, 2b, 2c) verbundene Ausgabeverbindung eigenständig ausgeführt werden.

9.  Managementsystem zum Steuern eines Knotens (2a, 2b, 2c) in einem Paketnetz (1), das Verkehr befördert, der verschiedenen Dienstklassen zugeordnet ist, mit:

    (a) Mitteln (71) zum Lesen lokaler Werte von einer oder mehreren Leistungskennzahlen in jeder von mehreren unterschiedlichen Dienstklassen für Verkehr, der von dem Knoten (2a, 2b, 2b) in eine Verbindung ausgegeben wurde; wobei das Managementsystem **gekennzeichnet ist durch**:

(b) einen Regler (72), der auf die Mittel (71) zum Lesen reagiert und dazu angeordnet ist, die Ressourcen des Knotens für die Verbindung automatisch abzutrennen, wobei die Werte der Leistungskennzahlen berücksichtigt werden, um eine Sollbeziehung zwischen Leistungskennzahlen für unterschiedliche Dienstklassen aufrechtzuerhalten.

## Revendications

1.  Procédé d'exploitation d'un noeud (2a, 2b, 2c) dans un réseau par paquets (1) transportant du trafic affecté à différentes classes de services, le procédé comprenant :

    (a) l'obtention (2.3) de mesures de performance locale dans chacune parmi une pluralité de différentes classes de services pour le trafic sortant du noeud (2a, 2b, 2c) sur une liaison, ledit procédé étant **caractérisé par** :
    (b) le partitionnement automatique (2.7) des ressources dudit noeud pour ladite liaison entre lesdites classes de services en prenant en compte les valeurs desdites mesures de performance pour différentes classes de services afin de maintenir une relation cible entre des mesures de performance pour les différentes classes de services.

2.  Procédé selon la revendication 1, dans lequel ladite étape (2.3) d'obtention de mesures de performance comprend l'obtention répétitive d'un paramètre de performance, et la détermination d'une tendance concernant lesdits paramètres de performance.

3.  Procédé selon la revendication 2, dans lequel ladite étape (2.3) d'obtention de mesures de performance comprend le calcul, à partir d'une séquence temporelle de paramètres de performance, d'une ou plusieurs valeurs prédites pour le paramètre où chaque paramètre de performance et l'utilisation de ladite valeur prédite comme ladite mesure de performance.

4.  Procédé selon l'une quelconque des revendications précédentes, dans lequel les étapes (a) de l'obtention (2.3) et (b) du partitionnement automatique (2.7) sont réalisées de façon autonome pour chacune parmi une pluralité de liaisons reliées au noeud.

5.  Procédé selon l'une quelconque des revendications précédentes, dans lequel la mesure de performances obtenue à l'étape (a) représente l'utilisation par du trafic appartenant à chaque classe de service de la largeur de bande réservée pour cette classe de service.

6.  Procédé selon l'une quelconque des revendications 1 à 4, dans lequel les paramètres de performance déterminés lors de l'étape (a) d'obtention comprend un ou plusieurs parmi : le nombre de paquets sortants ; la perte de paquets ; le retard des paquets ; les taux de débordement du tampon de noeud; et la longueur moyenne de la file d'attente de sortie du noeud.

7.  Procédé selon l'une quelconque des revendications précédentes, comprenant la lecture au niveau du noeud (2a, 2b, 2c) d'un champ transporté avec un paquet et indiquant une classe de service affectée à ce paquet.

8.  Procédé d'exploitation d'un réseau par paquets (1) transportant du trafic affecté à différentes classes de services, le réseau (1) comprenant une pluralité de noeuds (2a, 2b, 2c) et de liaisons interconnectant les noeuds, le procédé comprenant :

    (a) au niveau de chaque noeud (2a, 2b, 2c), l'obtention de mesures de performance locale dans chacune parmi une pluralité de différentes classes de services pour le trafic sortant du noeud (2a, 2b, 2c) sur une liaison ; ledit procédé étant **caractérisé par** :
    (b) le partitionnement automatique des ressources dudit noeud pour ladite liaison entre lesdites classes de services en prenant en compte les valeurs desdites mesures de performance pour différentes classes de services afin de maintenir une relation cible entre des mesures de performance pour différentes classes de services ;

    dans lequel les étapes (a) et (b) sont réalisées de façon autonome pour chacun parmi la pluralité de noeuds (2a, 2b, 2c) et pour chaque liaison de sortie reliée à un noeud (2a, 2b, 2c).

**9.** Système de gestion pour la commande d'un noeud (2a, 2b, 2c) dans un réseau par paquets (1) transportant du trafic affecté à différentes classes de services, comprenant :

(a) des moyens (71) pour la lecture de valeurs locales d'une ou de plusieurs mesures de performance dans chacune parmi une pluralité de différentes classes de services pour le trafic sortant du noeud (2a, 2b, 2c) sur une liaison ;
ledit système de gestion étant **caractérisé par** :
(b) un agent de commande (72) sensible auxdits moyens (71) de lecture, et agencé pour partitionner les ressources dudit noeud pour ladite liaison de façon automatique, en prenant en compte les valeurs desdites mesures de performance afin de maintenir une relation cible entre des mesures de performance pour différentes classes de services.

Fig.1.

# Fig.2.

INPUT:QoS
EXPECTED LOAD PROPORTIONS
(BETWEEN CLASSES)
STARTED POLLING PERIOD — 2.1

WAIT FOR
POLLING TIME — 2.2

COLLECT TRAFFIC DATA
PER QoS CLASS — 2.3

COMPUTE CURRENT
LOAD PER CLASS — 2.4

2.5
IS THE LOAD PROPORTION
BETWEEN CLASSES THE ONE
EXPECTED ? — Y

N

COMPUTE NEW
RESOURCE RESERVATION — 2.6

CONFIGURE RECOURCES — 2.7

COMPUTE NEXT
POLLING TIME — 2.8

# Fig.3.

LINEAR
PROGRAMMING 73

COMPUTATION

71
TREND
ANALYSER

BANDWIDTH
MANAGER 72

DATA
COLLECTION

APPLY
CHANGES

2a

Fig.4.

# Fig.4 (Cont).

| DataMonitor |
|---|
| ⬡ snmpMappingTable |
| ⬡ portAddress |
| ⬡ pollingPeriod |
| ◆ setPollingPeriod()<br>◆ create()<br>◆ activate() |

| TrendAnalyser |
|---|
| ⬡ inputRates |
| ⬡ classPartitions |
| ⬡ averageLoads |
| ◆ calculateAverageLoads()<br>◆ setCurrentClassPartitions() |

| Events |
|---|
| |
| |

| PDSLoadViolationEvent |
|---|
| ⬡ averageInputRates |
| |

| PartitionChangeEvent |
|---|
| ⬡ classPartitions |
| |

| PDSInputRateEvent |
|---|
| ⬡ inputRates |
| |

EP 1 228 605 B1

# Fig.5.

# Fig.5 (Cont i).

# Fig.5 (Cont ii).

| aDataMonitor: DataMonitor | aTrendAnalyser: TrendAnalyser | aBwManager: BwManager | aGUI : GUI | anLP: LinearProgram |
|---|---|---|---|---|

activate( )

activate( )

5.2

PDSinputRateEvent

PDSLoadEvent

PDSLoadViolationEvent

5.3

Calculate( )

SNMP Interaction with Router

snmpNewPartitions()  5.4

PDSPartitionChangeEvent

PDSPartitionChangeEvent

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9913624 A

- WO 9911003 A